# EUROPEAN PATENT APPLICATION

(11) **EP 4 734 064 A1**
(43) Date of publication of application: **29.04.2026**
(21) Application number: 24927603.1
(22) Date of filing: 05.09.2024
(51) Int. Cl.: G06T 11/60

(54) **METHOD AND APPARATUS FOR GENERATING IMAGE, DEVICE, MEDIUM AND PROGRAM PRODUCT**

(71) Applicant: Beijing Zitiao Network Technology Co., Ltd., Beijing 100190 (CN)
(72) Inventor: MENG, Quan, Beijing 100028 (CN); WANG, Saisai, Beijing 100028 (CN); PAN, Ruidong, Beijing 100028 (CN); WANG, Yuzhou, Beijing 100028 (CN); KANG, Hongwei, Beijing 100028 (CN)
(74) Representative: Marks & Clerk LLP
(86) International application number: PCT/CN2024/117276
(87) International publication number: WO 2026/050988

(57) **Abstract**

Embodiments of the present disclosure provide a method and apparatus for generating an image, a device, a medium and a program product. The method comprises generating (202), based on a user-generated content, a content descriptive text for the user-generated content. The method also comprises generating (204), based on the content descriptive text, a set of template elements of a template for the user-generated content. The method further comprises generating (206), based on the set of template elements and the user-generated content, a target composite image. In this method, a set of template elements associated with the user-generated content are generated based on the contents generated from user creation. The associated user-generated content and the set of template elements are further combined, such that the generated target composite image is more accurate and relevant. Therefore, the efficiency for image generation is improved and the user experience is enhanced.

## Description

### FIELD

Embodiments of the present disclosure generally relate to the field of image processing, and more specifically, to method and apparatus, device, medium and program product for generating an image.

### BACKGROUND

At present, machine learning is becoming increasingly important in peoples' daily life and work and gradually becomes an indispensable tool for people. People begin to process more and more work with machine learning models. For example, text processing job, image processing job and video processing job and the like are processed by the machine learning mode. In particular, the machine learning model with multimodal data processing capability has a great advantage when processing the data of multimodal type.

With rapid development of machine learning technology, the procedure for processing various multimodal data has become more rapid and accurate. For example, in case of text and image processing, the multimodal machine learning model may be used to assist the users to process operations related to texts and images. Besides, to satisfy the development needs of text and image processing technology, the machine learning model has been applied into image generation more extensively.

### SUMMARY

Embodiments of the present disclosure provide a method and apparatus, a device, a medium and a program product for generating an image.

In accordance with a first aspect of the present disclosure, there is provided a method for generating an image. The method comprises generating, based on a user-generated content, a content descriptive text for the user-generated content. The method also comprises generating, based on the content descriptive text, a set of template elements of a template for the user-generated content. The method further comprises generating, based on the set of template elements and the user-generated content, a target composite image.

In accordance with a second aspect of the present disclosure, there is provided an apparatus for generating an image. The apparatus comprises a content descriptive text generation module configured to generate, based on a user-generated content, a content descriptive text for the user-generated content; a set of template elements generation module configured to generate, based on the content descriptive text, a set of template elements of a template for the user-generated content; and a target composite image generation module configured to generate, based on the set of template elements and the user-generated content, a target composite image.

In accordance with a third aspect of the present disclosure, there is provided an electronic device, comprising at least one processor; and a memory for storing at least one program, the at least one program, when executed by the at least one processor, causing the at least one processor to perform the method according to the first aspect of the present disclosure.

In accordance with a fourth aspect of the present disclosure, there is provided a computer-readable storage medium stored thereon with computer programs, the computer programs, when executed by a processor, causing the processor to perform the method according to the first aspect of the present disclosure.

In accordance with a fifth aspect of the present disclosure, there is provided a computer program product. The computer program product includes computer programs, which computer programs, when executed by a processor, causing the processor to perform the method according to the first aspect of the present disclosure.

It should be appreciated that the contents described in this Summary are not intended to identify key or essential features of the embodiments of the present disclosure, or limit the scope of the present disclosure. Other features of the present disclosure will be understood more easily through the following description.

### BRIEF DESCRIPTION OF THE DRAWINGS

Through the following detailed description of the example embodiments of the present disclosure with reference to the accompanying drawings, the above and other objectives, features, and advantages of the present disclosure will become more apparent. In the example embodiments of the present disclosure, the same reference sign usually indicates the same component.
FIG. 1 illustrates a schematic diagram of an example environment in which the device and/or method according to some embodiments of the present disclosure may be implemented;
FIG. 2 illustrates a schematic diagram of an example method for generating an image according to some embodiments of the present disclosure;
FIG. 3 illustrates a schematic flowchart of a process for generating an image according to some embodiments of the present disclosure;
FIG. 4 illustrates a schematic diagram of an example for generating an image according to some embodiments of the present disclosure;
FIG. 5 illustrates a schematic diagram of another example for generating an image according to some embodiments of the present disclosure;
FIG. 6 illustrates a schematic diagram of a further example for generating an image according to some embodiments of the present disclosure;
FIG. 7 illustrates a schematic diagram of a further example for generating an image according to some embodiments of the present disclosure;
FIG. 8 illustrates a schematic diagram of a composite image including identification information according to some embodiments of the present disclosure;
FIG. 9 illustrates a schematic diagram of example positions of the user-generated content and the set of template materials for generating an image according to the embodiments of the present disclosure;
FIG. 10 illustrates a schematic diagram of a specific embodiment for generating an image according to some embodiments of the present disclosure;
FIG. 11 illustrates a schematic diagram of an example for generating summary descriptive text according to some embodiments of the present disclosure;
FIG. 12 illustrates a schematic diagram of an example of a training procedure of an image generating model for generating an image according to some embodiments of the present disclosure;
FIG. 13 illustrates a schematic diagram of an apparatus for generating an image according to some embodiments of the present disclosure;
FIG. 14 illustrates a schematic block diagram of an example device adapted to implement a plurality of embodiments of the present disclosure.

In each drawing, same or corresponding reference sign indicates the same or corresponding component.

### DETAILED DESCRIPTION OF EMBODIMENTS

It is to be understood that data involved in the technical solutions of the present disclosure, including but not limited to data per se, and acquisition or use of the data, should follow requirements of corresponding laws, regulations and rules.

It is to be appreciated that prior to the use of the technical solutions disclosed by various embodiments of the present disclosure, type, usage scope and application scenario of personal information involved in the present disclosure are made known to users through suitable ways in accordance with the relevant laws and regulations, to obtain user authorization.

For example, in response to receiving an active request from the users, a prompt information is sent to the users to clearly inform them that the operation requested to be executed needs to obtain and use their personal information. Accordingly, the users may voluntarily select, in accordance with the prompt information, whether to provide their personal information to software or hardware that performs operations of the technical solution, such as electronic device, application program, server or storage medium.

As an optional and non-restrictive implementation, in response to receiving an active request from the users, a prompt information is sent to the users, wherein the prompt information may be present in the form of pop-up window as an example and the prompt information may be displayed in text in the pop-up window. Besides, the pop-up window also may be provided with a select control through which the users may choose to "agree" or "disagree" the provision of personal information to the electronic device.

It should be appreciated that the above procedure for informing the users and obtaining the user authorization is only exemplary and does not restrict the implementations of the present disclosure. Other methods may also be applied to the implementations of the present disclosure as long as they comply with relevant regulations and laws.

Embodiments of the present disclosure will be described below in more details with reference to the drawings. Although the drawings illustrate some embodiments of the present disclosure, it should be appreciated that the present disclosure can be implemented in various manners and should not be limited to the embodiments explained herein. On the contrary, the embodiments are provided for a more thorough and complete understanding of the present disclosure. It is to be understood that the drawings and the embodiments of the present disclosure are provided merely for the exemplary purpose, rather than restricting the protection scope of the present disclosure.

In the description of the embodiments of the present disclosure, the term "includes" and its variants are to be read as open-ended terms that mean "includes, but is not limited to." The term "based on" is to be read as "based at least in part on." The term "one embodiment" or "this embodiment" is to be read as "at least one example embodiment." The terms "first", "second" and so on can refer to same or different objects. The following text also may include other explicit and implicit definitions.

There are still many problems to be addressed during image generation. For example, usually when users intend to further generate individualized content creation based on existing information (such as user-generated content, which is in multi-mode and usually is video or image), they need to collect related information and process the existing information on their own. Sometimes, they might even need to write related scripts by themselves. However, the above process, which consumes a large amount of time and resources, is relatively low efficient and impacts the user experience.

For example, in traditional solutions, users may mine different types of user-generated contents (UGC), such as content of video creation, content of image creation, content of audio creation and content of text creation etc. Then, the users further process materials in the various types of user-generated contents and then splice the processed materials into a new material that can be put into the market. In this solution, it is usually required to mine the user contents manually, extract the mined user-generated contents, find the suitable and available materials and place the materials in a pre-made fixed template.

In general, the fixed template includes background content, product identifier and script text etc. An empty "slot" is left for the materials for substitution at a fixed position, and the slot is often fixed in the fixed template. The fixed template is manually made and of limited quantity. In such case, it is impossible to satisfy the need of releasing a large amount of materials. The template thus is monotonous and unattractive to other uses. Further, the generated fixed template in general is irrelevant to the mined materials. It is often the case that the same fixed template includes materials in different styles and types. A sense of detachment is therefore observed between the fixed template and the materials in the fixed "slot". It is impossible to provide the users with individualized match and the user experience is greatly impacted.

To at least solve the above and other potential problems, embodiments of the present disclosure provide a method for generating an image. In this method, a content descriptive text for the user-generated content may be generated at the computing device in the first place, wherein the user-generated content is created by the user. For example, the user-generated content is video or image or a combination thereof. The content descriptive text is obtained by applying the user-generated content into a machine learning model. Next, the computing device also processes the content descriptive text to generate a set of template elements of the template for the user-generated content. In the end, the computing device generates a target composite image with the set of template elements generated and the user-generated content. In this method, a set of template elements associated with the user-generated content are generated based on the contents generated from user creation. The associated user-generated content and the set of template elements are further combined, such that the generated target composite image is more accurate and relevant. Therefore, the efficiency for image generation is improved and the user experience is enhanced.

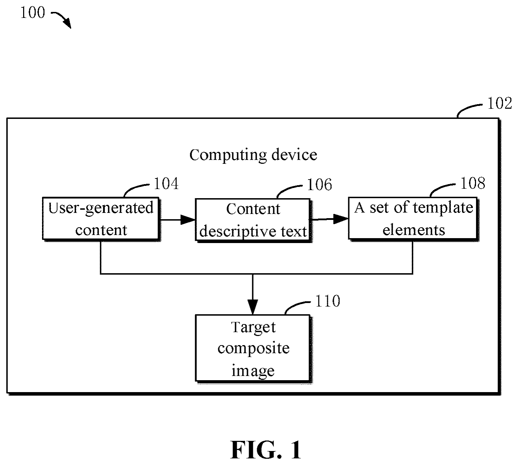

Embodiments of the present disclosure are to be described in details below with reference to the drawings, wherein FIG. 1 illustrates an example environment in which the device and/or method of the embodiments of the present disclosure may be implemented. In the environment 100, the computing device 102 first generates a content descriptive text 106 for the user-generated content 104, wherein the user-generated content is created by the user. For example, the user-generated content 104 is a video, or an image or a combination thereof. The content descriptive text 106 is obtained by processing the user-generated content 104, such as by applying the user-generated content 104 to a machine-learning model. Then, the computing device 102 generates a set of template elements 108 of a template for the user-generated content 104 with the content descriptive text 106. In the end, after determining the set of template elements 108, the computing device 102 further combines with the user-generated content 104 to generate a target composite image 110.

Examples of the computing device 102 include, but not limited to, personal computer, server computer, handheld or laptop device, mobile device (such as mobile phone, Personal Digital Assistant (PDA), media player and the like), multi-processor system, consumer electronics, minicomputer, main frame computer and a distributed computing environment including any of the above systems or devices etc.

As shown in FIG. 1, the computing device 102 may first generate the content descriptive text 106 for the user-generated content 104, wherein the user-generated content 104 is created by the user. For example, the user-generated content 104 is a video, or an image or a combination thereof. In one example, the user-generated content 104 may be a segment of video, e.g., a 10-second video created by the user. In another example, the user-generated content 104 may be an image, e.g., an image made by the user by collecting, clipping and splicing among other operations. In a further example, the user-generated content 104 may be a combination of video and image. For example, the user creates the user-generated content 104 by splicing and combining the video and the image via an editing software. Alternatively, the user-generated content also may be an audio or a combination of audio and video.

In some embodiments, the content descriptive text 106 includes information extracted for the user-generated content 104, and the information may include one or more of the following: what is mainly described by the user-generated content 104, what is the style of the user-generated content 104 and what is the theme color of the user-generated content 104 and the like. In addition, the theme of the user-generated content 104 may be further extracted and determined in accordance with the content descriptive text 106. For example, the theme of the user-generated content 104 may be determined as singing live streaming, football match and game entertainment etc.

In some embodiments, the content descriptive text 106 is obtained by applying the user-generated content 104 into the machine learning model. For example, the content descriptive text 106 is obtained by applying the user-generated content 104 to a visual model. Additionally, the content descriptive text 106 is obtained by applying the user-generated content 104 into a large-scale visual model. It is to be understood that the examples are provided merely for describing the present disclosure, rather than restricting it.

Next, the computing device 102 generates a set of template elements 108 of the template for the user-generated content 104 with the content descriptive text 106. In some embodiments, a set of template elements 108 only include background images. In some other embodiments, a set of template elements 108 include background images and stickers. In some further embodiments, a set of template elements 108 include background images and summary descriptive texts. In some further embodiments, a set of template elements 108 include background images, stickers and summary descriptive texts. Additionally, a set of template elements 108 also may include product identifier, company identifier or username watermark etc. To facilitate description and understanding, the summary descriptive text is also referred to as script.

In some embodiments, the computing device may process the content descriptive text 106 with an image generating model, so as to generate background images and stickers in the set of template elements 108. In some other embodiments, the computing device may process the content descriptive text 106 with a large language model to generate a script for the user-generated content 104.

After determining the set of template elements 108, the computing device 102 further combines with the user-generated content 104 to generate the target composite image 110. In some embodiments, the computing device generates more than one sticker and more than one script and combines a plurality of stickers with a plurality of scripts according to a predetermined position or a preset rule to generate a set of template elements 108.

Through this method, a set of template elements associated with the user-generated content are generated based on the contents generated from user creation. The associated user-generated content and the set of template elements are further combined, such that the generated target composite image is more accurate and relevant. Therefore, the efficiency for image generation is improved and the user experience is enhanced.

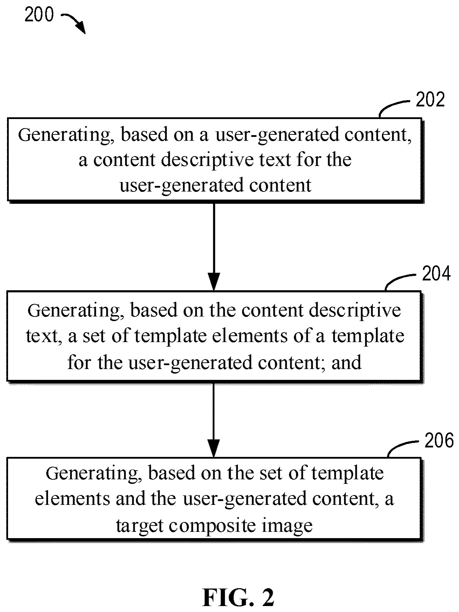

The schematic diagram of an example environment in which the device and/or method according to some embodiments of the present disclosure may be implemented has been described above with reference to FIG. 1. Next, a schematic diagram of an example method for generating an image according to some embodiments of the present disclosure is to be depicted below with reference to FIG. 2. The method in FIG. 2 may be executed by the computing device 102 in FIG. 1 and/or any suitable computing devices.

As shown in FIG. 2, in the example method 200, the computing device 102 generates the content descriptive text 106 for the user-generated content 104 based on the user-generated content 104, wherein the user-generated content 104 is created by the user. The user-generated content 104 may be video or image or a combination thereof.

In some embodiments, the content descriptive text 106 is obtained by applying the user-generated content 104 to the machine learning model. For example, the content descriptive text 106 is obtained by applying the user-generated content 104 to a visual model. Additionally, the content descriptive text 106 is obtained by applying the user-generated content 104 into a large-scale visual model. In some embodiments, there is a predetermined mapping relation between the user-generated content and the content descriptive text. After the user-generated content 104 is obtained, the content descriptive text 106 corresponding to the user-generated content may be obtained from the predetermined mapping relation. The above examples are provided merely for describing the present disclosure, rather than restricting it.

Next, at block 204, the computing device 102 generates a set of template elements 108 of the template for the user-generated content 104 based on the content descriptive text 106. In order to better display the user-generated content, it is required to determine the template combined with the user-generated content in accordance with the content descriptive text 106 determined based on the user-generated content. The template consists of a set of template elements.

In some embodiments, the computing device may process the content descriptive text 106 with the image generating model, to generate background images and stickers in the set of template elements 108. In addition, the computing device processes the content descriptive text 106 with the machine learning model to generate a prompt information for the background image and a prompt information for the sticker. For example, the machine learning model is a large language model. Then, the prompt information for the background image and the prompt information for the sticker are input to the image generating model to generate the background image and the sticker. Alternatively, the computing device 102 also may obtain a mapping relation between the descriptive text and the background image and a mapping relation between the descriptive text and the sticker in advance. After obtaining the content descriptive text 106, the computing device 102 obtains the background image corresponding to the content descriptive text 106 in accordance with the mapping relation between the descriptive text and the background image. The computing device 102 also may obtain the sticker corresponding to the content descriptive text 106 in accordance with the mapping relation between the descriptive text and the sticker. The above examples are provided merely for describing the present disclosure, rather than restricting it.

In some embodiments, the computing device may process the content descriptive text 106 with the large language model, to generate the script for the user-generated content 104. In some embodiments, the computing device 102 may obtain a mapping relation between the descriptive text and the script. After obtaining the content descriptive text 106, the computing device 102 may search the script corresponding to the descriptive text using this mapping relation. The above examples are provided merely for describing the present disclosure, rather than restricting it.

In the end, at block 206, the computing device 102 generates, based on the set of template elements 108 and the user-generated content 104, the target composite image 110. The set of template elements 108, after being obtained, may be further appropriately combined with the user-generated content 104 to generate the target composite image.

In some embodiments, the target composite image 110 only includes the background image and the user-generated content 104, and the user-generated content 104 is in front of the background image. In such case, the computing device may adjust the size of the user-generated content 104 according to a preset proportion. For example, the computing device adjusts the user-generated content 104 to occupy 40% of the size of the background image. In addition, at this moment, the computing device may place the user-generated content at any suitable position in the background image.

In some embodiments, the target composite image 110 includes background image, sticker and user-generated content 104, and the user-generated content 104 and the sticker are also in front of the background image. In such case, the computing device may place the background image and the sticker in accordance with preset position information of the set of template elements 108 to generate the composite image with the user-generated content 104. In one example, the sticker and the user-generated content 104 do not contact in the background image. In another example, the sticker and the user-generated content 104 make contact with each other in part in the background image. For example, a part of the sticker covers the user-generated content 104 and is displayed in front of the user-generated content 104. In addition, the computing device also may place the background image and the sticker in accordance with the preset rule of the set of template elements 108. For instance, the user may set the sticker to cover the user-generated content 104. The threshold ratio of the user-generated content 104 covered by the sticker may be set to 20%.

In some embodiments, the target composite image 110 includes the background image, the summary descriptive text and the user-generated content 104, and the user-generated content 104 and the summary descriptive text are also in front of the background image. In such case, the computing device may place the background image and the summary descriptive text in accordance with the preset position information of the set of template elements 108 and generate the composite image with the user-generated content 104. It is to be appreciated that there may be multiple summary descriptive texts scattered in front of the background image. In one example, the summary descriptive text does not contact the user-generated content. In another example, the summary descriptive text and the user-generated content make partial contact with each other. In addition, the computing device also may place the background image and the summary descriptive text in accordance with the preset rule of the set of template elements 108. For instance, the user may set the ratio of user-generated content 104 covered by the summary descriptive text. The threshold ratio of the user-generated content 104 covered by the summary descriptive text may be set to 10%.

In some embodiments, the target composite image 110 includes the background image, the sticker, the script and the user-generated content, and the user-generated content 104, the sticker and the script are also in front of the background image. In such case, the computing device may arrange the user-generated content 104, the sticker and the script in accordance with the preset position information of the set of template elements 108 and/or the preset rule, and the computing device may place the user-generated content 104, the sticker and the script based on the predetermined position information. The computing device also may place the user-generated content 104, the sticker and the script by the preset rule. For example, the user-generated content 104, the sticker and the script may be placed in contact with one another according to a preset ratio. Additionally, the user also may set display priority of the user-generated content 104, the sticker and the script. For example, the display priority of the script is set to be the highest. In such case, the script will never contact the user-generated content 104 and/or the sticker and is always displayed in the forefront of the composite image. The above is the example of the present disclosure, rather than restriction.

In some embodiments, the set of template elements 108 also include identification information in addition to the user-generated content 104, the sticker and the script, and the identification information includes product identifier, company identifier or username watermark etc. In one example, the user may set the transparency of the identification information. For example, the transparency of the identification information is set to 50%. In another example, the user may display the identification information in bold or highlight the identification information. In a further example, the user may set the position information of the identification information. For example, the identification information is positioned at four corners of the composite image. Additionally, the user may configure that any other elements except for the background image are not allowed within a given range centered on the identification information. For example, the presence of any elements apart from the background image is not allowed within a range defined by diffusing the identification information outward by 50%.

Through this method, a set of template elements associated with the user-generated content are generated based on the contents created by the user. The associated user-generated content and the set of template elements are further combined, such that the generated target composite image is more accurate and relevant. Therefore, the efficiency for image generation is improved and the user experience is enhanced.

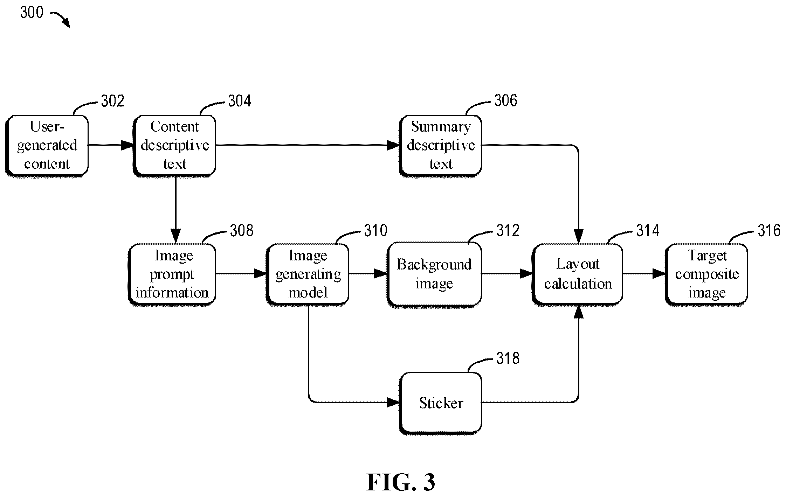

The schematic diagram of an example method for generating an image in accordance with some embodiments of the present disclosure has been described above with reference to FIG. 2. Next, a schematic flowchart of a process for generating an image in accordance with some embodiments of the present disclosure is to be depicted in conjunction with FIG. 3. The example of FIG. 3 may be executed by the computing device 102 in FIG. 1 or any suitable computing devices.

In the example 300 shown by FIG. 3, the computing device 102 first generates the content descriptive text 304 for the user-generated content 302, and the user-generated content 302 is created by the user. The user-generated content 302 is a video or an image or a combination thereof. The content descriptive text 304 is obtained by applying the user-generated content 302 to the machine learning model. Additionally, the machine learning model is a large-scale visual model.

In some embodiments, after applying the user-generated content 302 to the large-scale visual model, the computing device obtains various information extracted for the user-generated content 302. For example, in some embodiments, the content descriptive text 304 includes information extracted for the user-generated content 302 and the information includes at least one of the following: what is mainly described by the user-generated content 302, what is the style of the user-generated content 302 and what is the theme color of the user-generated content 302 and the like. In addition, the theme of the user-generated content 302 may be further extracted and determined in accordance with the content descriptive text 304. For example, the theme of the user-generated content 302 may be determined as singing live streaming, football match and game entertainment etc.

Subsequent to obtaining the above various information, the computing device further generates the summary descriptive text 306 based on the information in the content descriptive text 304. To facilitate the description, the summary descriptive text 306 is also referred to as script. The script is generated by extracting the text information for the user-generated content in the content descriptive text. The computing device may generate the text information with the large language model. Additionally, the large language model is part of the large-scale visual model and the summary descriptive text 306 is one element in the set of template elements.

Meanwhile, the computing device also generates an image prompt information 308 in accordance with the content descriptive text 304, wherein the image prompt information 308 includes first image prompt information and second image prompt information.

In some embodiments, the first image prompt information includes: the text for the main description of the user-generated content 302, the text for the style of the user-generated content 302 and the text for the theme color of the user-generated content 302 among other text information. In addition, the text for the region or the date of the user-generated content 302 may also be obtained. The second image prompt information includes a text for the theme of the user-generated content 302. For example, the theme of the user-generated content 302 may be determined as singing live streaming, football match and game entertainment etc.

Next, the computing device applies the image prompt information 308 to the image generating model 310 to further generate the background image 312 and the sticker 318. Both the background image 312 and the sticker 318 are elements in the set of template elements. Additionally, the image generating model 310 is a diffusion model. Furthermore, the image generating model 310 is a Stable Diffusion model. It is to be understood that this is just an example and does not restrict the present disclosure.

In some embodiments, the background image 312 is generated by the computing device according to the first image prompt information. The background image 312 is always behind the set of template elements and the user-generated content 302, and is an indispensable part of the final composite image. In other words, the composite image at least consists of the background image and the user-generated content 302. In addition, the background image is strongly correlated with the user-generated content.

In some embodiments, the sticker 318 is generated by the computing device according to the second image prompt information. Specifically, the sticker 318 is generated in accordance with the text for the theme of the user-generated content 302 in the second image prompt information. In one example, when it is determined that the theme of the user-generated content 302 is singing live streaming, the sticker may be an image related to singing or music. In another example, when it is determined that the theme of the user-generated content 302 is football game, the sticker may be an image related to football or match. In a further example, when it is determined that the theme of the user-generated content 302 is game entertainment, the sticker may be an image related to game or electronic sports.

After the computing device determines the summary descriptive text 306, the background image 312 and the sticker 318, the above three elements are determined as a set of template elements. In addition, the computing device also may determine other template elements in view of the requirements and adds them into the above set of template elements. Afterwards, the computing device may apply the above set of template elements into layout calculation 314 to determine a plurality of candidate composite images.

In some embodiments, the above three elements may be placed in accordance with the preset position information, such as a first plurality of positions. Besides, the user-generated content also has preset position information, e.g., a second plurality of positions. The computing device places the three elements and the user-generated content according to their respective position information.

In some embodiments, the above three elements may also be placed according to the preset rule. For example, the size of the user-generated content 104 is adjusted according to a preset proportion. For example, the user-generated content 302 is adjusted to occupy 40% of the size of the background image. In addition, at this moment, the computing device may place the user-generated content at any suitable position in the background image.

In some embodiments, a part of the sticker 318 covers the user-generated content 302 and is displayed in front of the user-generated content 302. Additionally, the user may set the ratio of the user-generated content 302 covered by the sticker. For instance, the user may set a threshold ratio of the user-generated content 104 covered by the sticker to be 20%.

In some embodiments, the computing device determines a set of candidate composite images including the user-generated content 302 and the three elements in accordance with a plurality of preset position information and a plurality of preset rules, e.g., the above described placement positions and placement rules etc. The set of candidate composite images include a plurality of candidate composite images and the score of each set of candidate composite images may be determined by a scoring model.

In some embodiments, the user may set a threshold score. In such case, after the layout calculation 314, the candidate composite image is determined as the target composite image 316 if its score reaches or exceeds the threshold score. Additionally, in case that a plurality of candidate composite images has a score reaching or exceeding the threshold score, the candidate composite image having the highest score in the plurality of candidate composite images is determined as the target composite image 316.

In this method, a set of template elements associated with the user-generated content are generated with the contents created by the user. The associated user-generated content and the set of template elements are further combined, such that the generated target composite image is more accurate and relevant. Therefore, the efficiency for image generation is improved and the user experience is enhanced.

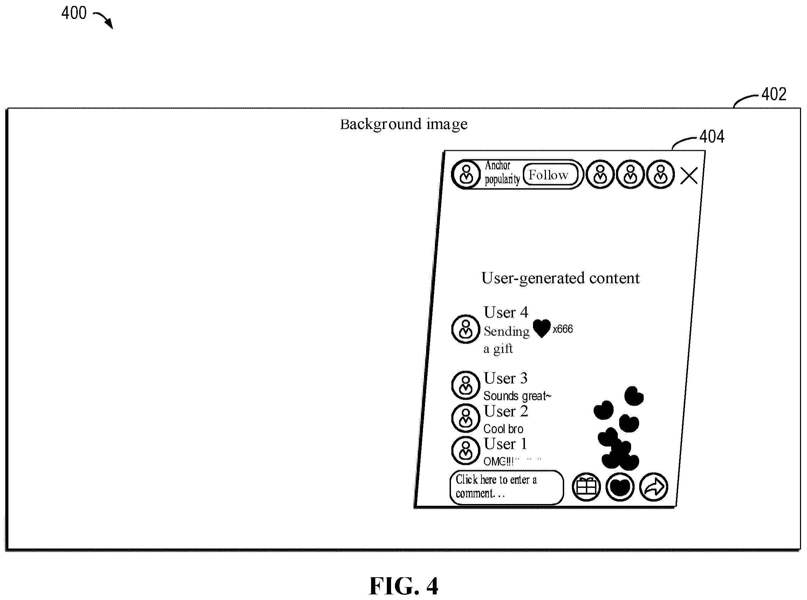

The schematic flowchart of a process for generating an image according to some embodiments of the present disclosure has been described above with reference to FIG. 3. Next, a schematic diagram of an example for generating an image according to some embodiments of the present disclosure is to be depicted with reference to FIG. 4.

In the example 400, the background image 402 and the user-generated content 404 form the target composite image. In this example, the target composite image only includes the background image 402 and the user-generated content 404.

In some embodiments, the user-generated content 404 is created by the user. The user-generated content 404 is a video or an image or a combination thereof. Additionally, the user-generated content 404 may be a video generated from recording the live streaming.

In some embodiments, the computing device may adjust the size of the user-generated content 404 according to a preset proportion. For example, the computing device adjusts the user-generated content 404 to occupy 40% of the size of the background image. In addition, at this moment, the computing device may place the user-generated content at any suitable position in the background image.

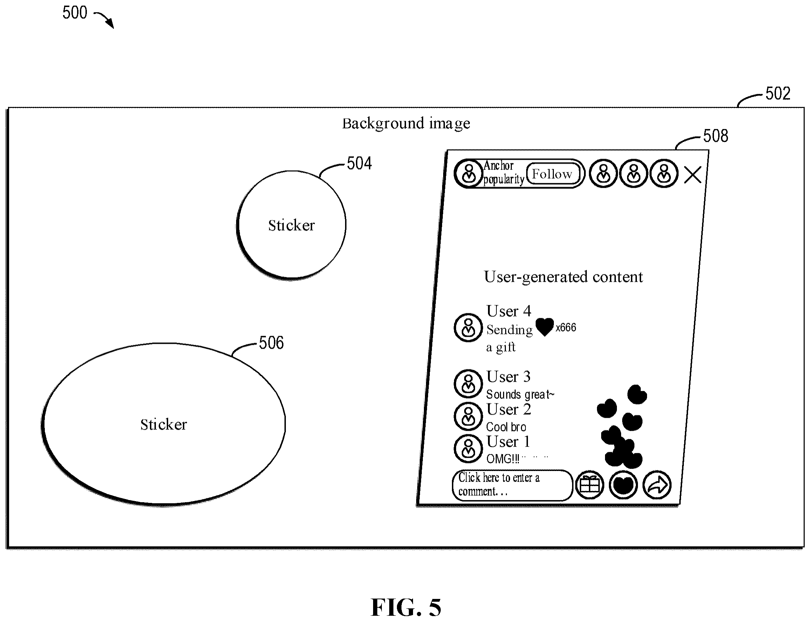

The schematic diagram of an example for generating an image according to some embodiments of the present disclosure has been described above with reference to FIG. 4. Next, a schematic diagram of another example for generating an image according to some embodiments of the present disclosure is to be depicted below with reference to FIG. 5.

In the example 500, on the basis of the previous example 400, in addition to the background image 502 and the user-generated content 508, the sticker 504 and the sticker 506 are added. The size and the shape of the sticker 504 and the sticker 506 are set voluntarily by the user and both are placed in front of the background image.

In some embodiments, there is at least one sticker and the sticker may be placed according to the preset position. In addition, the sticker also may be placed by the preset rule. In one example, the sticker and the user-generated content do not contact in the background image. In another example, the sticker and the user-generated content make contact with each other in part in the background image. For example, a part of the sticker covers the user-generated content and is displayed in front of the user-generated content. The user also may set the ratio of the user-generated content 104 covered by the sticker. For instance, the user may set the threshold ratio of the user-generated content 104 covered by the sticker to be 20%.

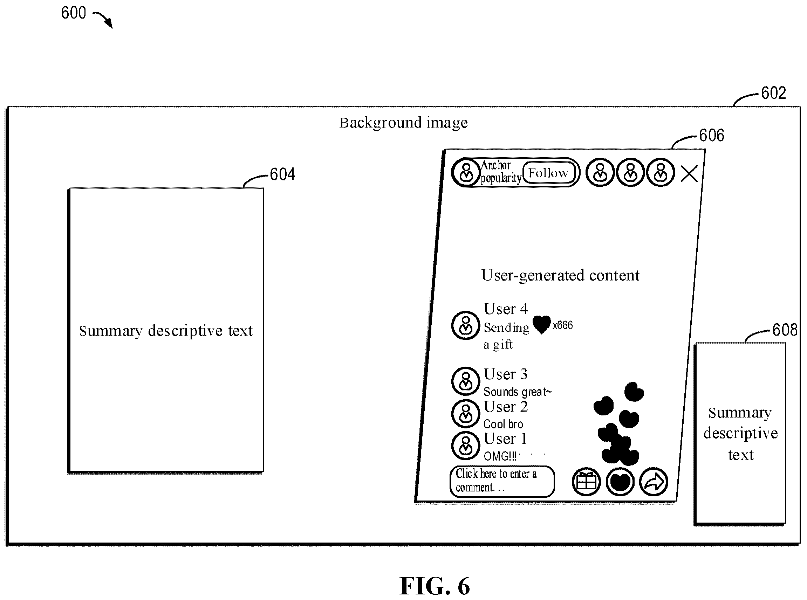

The schematic diagram of another example for generating an image according to some embodiments of the present disclosure has been described above with reference to FIG. 5. Next, a schematic diagram of a further example for generating an image according to some embodiments of the present disclosure is to be depicted below with reference to FIG. 6.

In the example 600, on the basis of the previous example 400, in addition to the background image 602 and the user-generated content 606, the summary descriptive text 604 and the summary descriptive text 606 are added. To facilitate the description, the summary descriptive text 604 is referred to as script 1 and the summary descriptive text 606 is referred to as script 2.

In some embodiments, neither the script 1 nor the script 2 contacts the user-generated content and the script 1 and the script 2 are placed in the background image according to the preset position.

In some embodiments, the script 1 and/or the script 2 makes contact with the user-generated content and partly covers the user-generated content. The computing device may set the ratio of the user-generated content covered by the script in view of the preset rule. For example, the computing device may set the threshold ratio of the user-generated content covered by the script to be 10%.

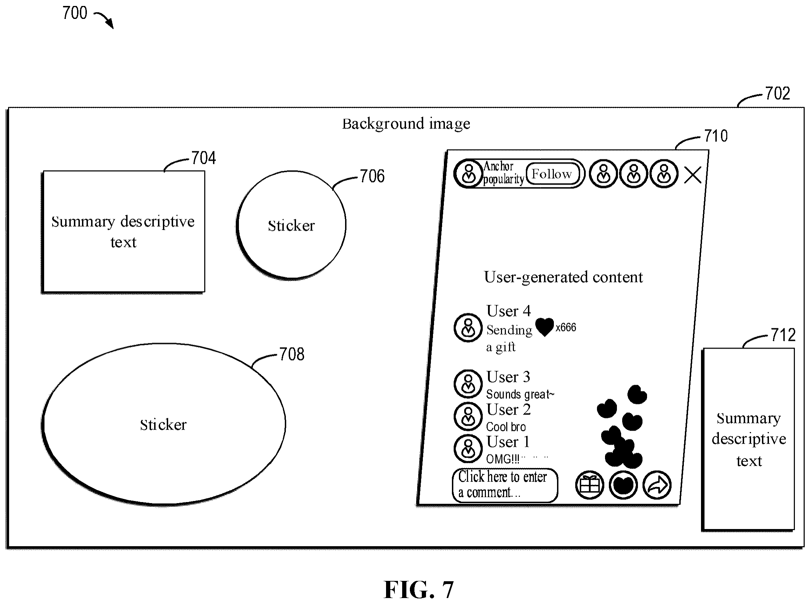

The schematic diagram of a further example for generating an image according to some embodiments of the present disclosure has been described above with reference to FIG. 6. Next, a schematic diagram of a further example for generating an image according to some embodiments of the present disclosure is to be depicted below with reference to FIG. 7.

In the example, on the basis of the previous examples 400, 500 and 600, in addition to the background image 702 and the user-generated content 710, the summary descriptive text 704, the sticker 706, the sticker 708 and the summary descriptive text 712 are placed in front of the background image 702. To facilitate the description, the summary descriptive text 704 is referred to as script 1 and the summary descriptive text 712 is referred to as script 2.

In some embodiments, the computing device may place the user-generated content 710, the sticker 706, the sticker 708, the script 1 and the script 2 in accordance with the predetermined position information. The computing device also may place the user-generated content, the sticker and the script by a predetermined rule. For example, the user-generated content, the sticker and the script are placed according to the preset rule. The edge of the sticker is displayed in bold and the script is highlighted for instance. Additionally, the user also may set the display priority of the user-generated content, the sticker and the script. For example, the display priority of the script is set to be the highest. In such case, the script will never make contact with the user-generated content and/or the sticker and is always displayed in the forefront of the composite image. The above is the example of the present disclosure, rather than restriction.

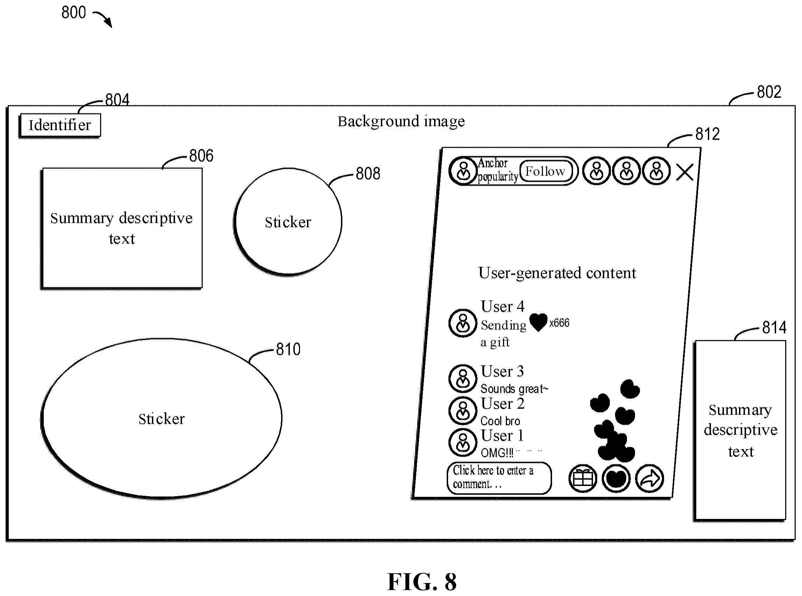

The schematic diagram of a further example for generating an image according to some embodiments of the present disclosure has been described above with reference to FIG. 7. Next, a schematic diagram of a composite image including identification information according to some embodiments of the present disclosure is to be depicted below with reference to FIG. 8.

On the basis of the previous example 700, an identifier 804 is also included in the example 800, in addition to the background image 802, the summary descriptive text 806, the sticker 808, the sticker 810, the user-generated content 812 and the summary descriptive text 814. The identifier 804 includes a product identifier, a company identifier or a username watermark etc.

In some embodiments, the user may set the transparency of the identification information, e.g., to be 50%. In another example, the user may display the identification information in bold or highlight it. In a further example, the user may set the position information of the identification information. For example, the identification information is positioned at four corners of the composite image. In addition, the user may configure that any other elements except for the background image are not allowed within a given range centered on the identification information. For example, the presence of any elements apart from the background image is not allowed within a range defined by diffusing the identification information outward by 50%.

In some embodiments, the computing device sets the position of the identifier 804 to have the highest priority. That is, any other elements in the composite image would not cover the identifier 804, and the identifier 804 may appear in the forefront of the composite image in any cases.

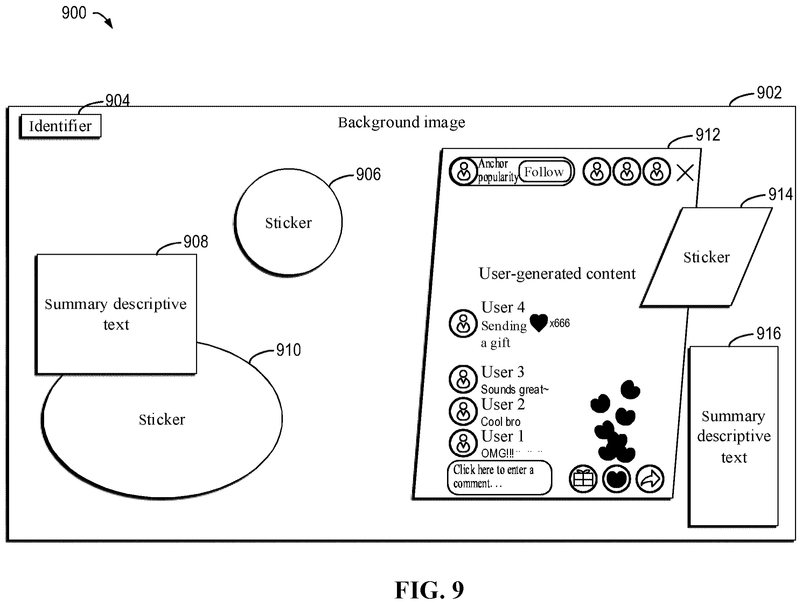

The schematic diagram of a composite image including identification information according to some embodiments of the present disclosure has been described above with FIG. 8. Next, a schematic diagram of example positions of the user-generated content and the set of template materials for generating an image according to some embodiments of the present disclosure is to be depicted below with reference to FIG. 9.

The example 900 consists of the background image 902, the identifier 904, the sticker 906, the summary descriptive text 908, the sticker 910, the user-generated content 912, the sticker 914 and the summary descriptive text 916.

In some embodiments, the position of the identifier 904 is fixed and the identifier 904 is placed according to a preset position range. In one example, the computing device places the identifier 904 within 5% of the upper left corner of the background image 902. In another example, the identifier 904, after being placed, makes no contact with any edge of the background image.

In some embodiments, the sticker 906 is placed according to the preset position and is displayed in front of the background image. In some embodiments, the summary descriptive text 908 and the sticker 910 are placed by the preset rule. For example, a part of the summary descriptive text 908 covers the sticker 910 and the summary descriptive text 908 is always displayed in front of the sticker 910. Additionally, the ratio of the sticker 910 covered by the summary descriptive text 908 does not exceed a predetermined threshold, such as 30% of the display area of the sticker 910.

In some embodiments, the sticker 914 also may cover the user-generated content 912. Similar to the above, the ratio of the user-generated content 912 covered by the sticker 914 should not exceed a predetermined threshold either, such as 5% of the display area of the user-generated content.

In some embodiments, the text contents of the summary descriptive text 908 and the summary descriptive text 916 may be the same and displayed according to different display styles. In some embodiments, the summary descriptive text 908 is displayed in bold and highlighted while the summary descriptive text 916 is displayed in art font.

In some embodiments, the text contents of the summary descriptive text 908 and the summary descriptive text 916 may be different. Additionally, the contents of the summary descriptive text 908 and the summary descriptive text 916 should be strongly correlated. For example, the summary of the content should be about the same theme or include the same keyword.

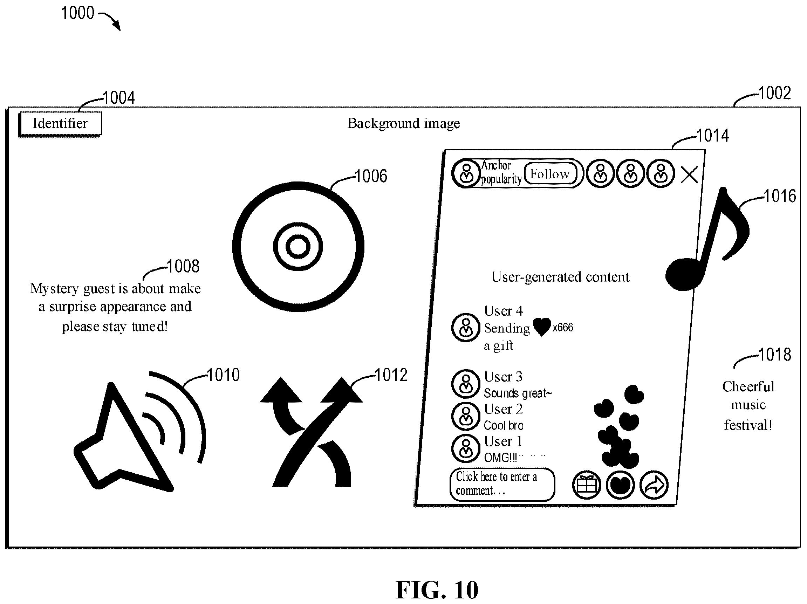

The schematic diagram of example positions of the user-generated content and the set of template materials for generating an image according to some embodiments of the present disclosure has been described above with reference to FIG. 9. Next, a schematic diagram of a specific embodiment for generating an image according to some embodiments of the present disclosure is to be depicted below with reference to FIG. 10.

The example 1000 includes the background image 1102 and the user-generated content 1014, wherein the user-generated content 1014 is a segment of content in which an anchor explains specific details of a music festival and mentions that there will be mystery guests showing up at the music festival. The music festival is sponsored and held by sponsors and organizers. In addition, the background image 1002 is generated in accordance with the first image prompt information for the user-generated content 1014.

In some embodiments, the identifier 1004 is the identifier of the sponsor and the organizer. In some other embodiments, the identifier 1004 is the watermark of the username of the anchor.

In some embodiments, the transparency of the identifier 1004 may be set. For example, the transparency of the identifier 1004 is set to 50%. The identifier 1004 may also be displayed in bold or highlighted. The position information of the identifier 1004 may also be configured. For example, the identifier 1004 is positioned at four corners of the composite image. Additionally, the user may configure that any other elements except for the background image are not allowed within a given range centered on the identification information. For example, the presence of any elements apart from the background image is not allowed within a range defined by diffusing the identification information outward by 50%.

In some embodiments, the summary descriptive information 1008 states that "mystery guest is about making a surprise appearance and please stay tuned". This summary descriptive information is generated from summarizing a summary description of the user-generated content with the large language model. Likewise, the summary descriptive information 1018 saying "cheerful music festival" is also generated based on the same large language model. Besides, the summary descriptive information 1008 and the summary descriptive information 1018 are correlated and may be directly or indirectly obtained from the user-generated content.

In some embodiments, the sticker 1016 is a CD; the sticker 1010 is a loudspeaker; the sticker 1012 is a random play identifier; and the sticker 1016 is a note. The above stickers are all generated in accordance with the second image prompt information for the user-generated content 1014. Furthermore, they are generated based on the theme information in the second image prompt information, and the theme information includes "music festival" and "music" etc.

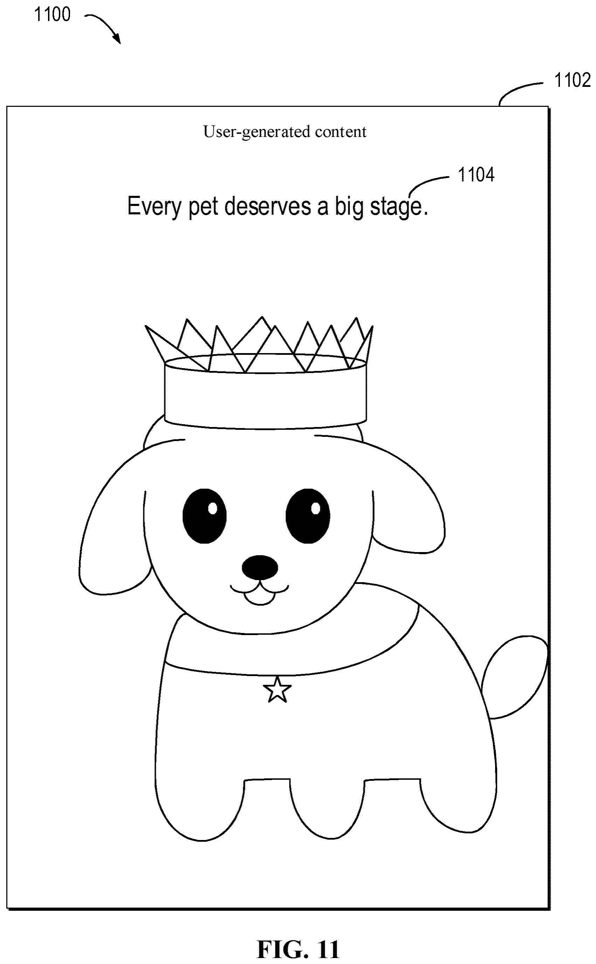

The schematic diagram of a specific embodiment for generating an image according to some embodiments of the present disclosure has been described above with reference to FIG. 10. A schematic diagram of an example of generating corresponding summary descriptive text according to the user-generated content in accordance with some embodiments of the present disclosure is to be depicted below with reference to FIG. 11.

In the example 1100, a scene content of the user-generated content 1102 shows that a pet dog celebrating its birthday is smiling at the camera.

In some embodiments, the computing device applies the user-generated content 1102 to the large-scale visual model and then interprets the user-generated content 1102 with the large-scale visual model to obtain the content descriptive text for the user-generated content 1102. The text for the main description of the user-generated content 1102, the text for the style of the user-generated content 1102 and the text for the theme color of the user-generated content 1102 among other text information are further obtained from the generated content descriptive text. In addition, the text for the region or the date of the user-generated content 1102 may also be obtained.

Then, the computing device extracts keywords from the various types of text information obtained and provides the summary descriptive information suited for the current scene and pertinent to the target object appearing in the current scene in view of the scene.

For example, the script 1104 saying "Every pet deserves a big stage" is generated in accordance with the user-generated content 1102.

In some embodiments, the computing device also may generate a plurality of candidate scripts with the large-scale visual model and grade the plurality of candidate scripts via the scoring model. The script having a score reaching or exceeding the threshold score among the plurality of candidate scripts is determined as the target script 1104. Additionally, keyword and semantic integrity in the generated candidate scripts may serve as the reference parameters for grading to grade the candidate scripts.

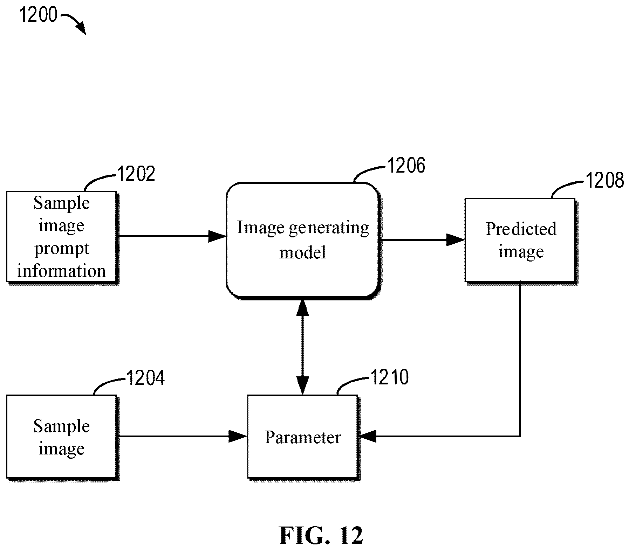

The schematic diagram of an example of generating corresponding summary descriptive text according to the user-generated content in accordance with some embodiments of the present disclosure has been described above with reference to FIG. 11. Next, a schematic diagram of an example of a training procedure of an image generating model for generating an image according to some embodiments of the present disclosure is to be depicted below with reference to FIG. 12.

In the example 1200, the image generating model is trained. The computing device may first obtain a sample image prompt information 1202. The sample image prompt information 1202 may be directed at the sample background image. The sample image prompt information is a text information and may be adjusted by the user in accordance with the requirements.

The computing device then applies the sample image prompt information 1202 to the image generating model 1206 to generate a predicted image 1208. The predicted image 1208 may be the generated background image. After generating the predicted image 1208, the computing device further compares the predicted image 1208 with the sample image 1204 to determine the differences there between. The computing device further adjusts the parameters of the image generating model to complete the training of the image generating model. Additionally, when it is required to generate the sticker using the image generating model, the above approach may also be applied to the sticker to train the image generating model. In some embodiments, the user may train the image generating model based on different sample images and sample image prompt information for the sample images, so as to enhance the generation capability of the image generating model with respect to different types of images.

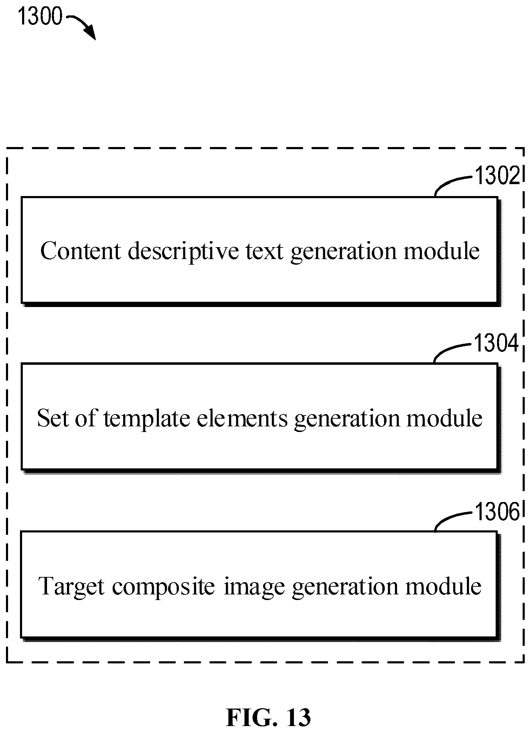

The schematic diagram of an example of a training procedure of an image generating model for generating an image according to some embodiments of the present disclosure has been described above with reference to FIG. 12. Next, a schematic block diagram of an apparatus 1300 for generating an image according to some embodiments of the present disclosure is to be depicted below with reference to FIG. 13.

As shown in FIG. 13, the apparatus 1300 comprises a content descriptive text generation module 1302 configured to generate, based on a user-generated content, a content descriptive text for the user-generated content; a set of template elements generation module 1304 configured to generate, based on the content descriptive text, a set of template elements of a template for the user-generated content; and a target composite image generation module 1306 configured to generate, based on the set of template elements and the user-generated content, a target composite image.

In some embodiments, wherein the set of template elements include a background image, wherein the module 1304 for generating template elements includes: a module for generating first image prompt information configured to generate, based on the content descriptive text, first image prompt information for the user-generated content; and a module for generating background image configured to generate, based on the first image prompt information, the background image for the template.

In some embodiments, wherein the set of template elements also include at least one of: a summary descriptive text or a sticker, wherein the module 1304 for generating template elements also includes at least one of: a module for generating summary descriptive text configured to generate, based on the content descriptive text, the summary descriptive text for the template; or a module for generating sticker configured to generate, based on the content descriptive text, the sticker for the template.

In some embodiments, the module for generating sticker includes: a module for generating second image prompt information configured to generate, based on the content descriptive text, second image prompt information for the user-generated content; and the module for generating sticker is configured to generate, based on the second image prompt information, the sticker for the template.

In some embodiments, wherein the first image prompt information includes at least one of: content of background image or color of background image.

In some embodiments, the module for generating background image includes: a module for application of the image generating model configured to generate the background image by applying the first image prompt information into an image generating model, the image generating model being a diffusion model.

In some embodiments, wherein a module for training the image generating model includes: a module for obtaining sample image prompt information and sample image configured to obtain a sample image prompt information and a sample image; a module for obtaining predicted image configured to obtain a predicted image by applying the sample image prompt information into the image generating model; and a module for adjusting parameters configured to adjust parameters of the image generating model based on the sample image and the predicted image.

In some embodiments, the target composite image generation module 1306 includes: a module for generating a set of candidate composite images configured to generate a set of candidate composite images based on the set of template elements and the user-generated content; and a module for selecting target composite image configured to select the target composite image from the set of candidate composite images.

In some embodiments, the module for generating a set of candidate composite images includes: a module for determining a first plurality of positions and a second plurality of positions configured to determine a first plurality of positions available for placing template elements in the set of template elements and a second plurality of positions available for placing the user-generated content; and a module for generating a set of candidate composite images configured to generate the set of candidate composite images by placing the template elements respectively at the first plurality of positions and placing the user-generated content respectively at the second plurality of positions.

In some embodiments, a set of candidate composite images includes: a module for determining a plurality of preset rules configured to determine a plurality of predetermined rules for placing the set of template elements and the user-generated content; and a module for generating a set of candidate composite images configured to generate the set of candidate composite images based on the plurality of predetermined rules.

In some embodiments, the module for selecting target composite image includes: a module for determining a set of scores configured to determine a set of scores for the set of candidate composite images; and the module for selecting target composite image configured to select the target composite image from the set of candidate composite images based on the set of scores, wherein a score of the target composite image exceeds a threshold score.

In some embodiments, the module 1302 for generating content descriptive text includes: a module for applying machine learning model configured to obtain a content descriptive text for the user-generated content by applying the user-generated content to a machine learning model.

In some embodiments, the user-generated content is an image or a video, and the machine learning model is a visual model.

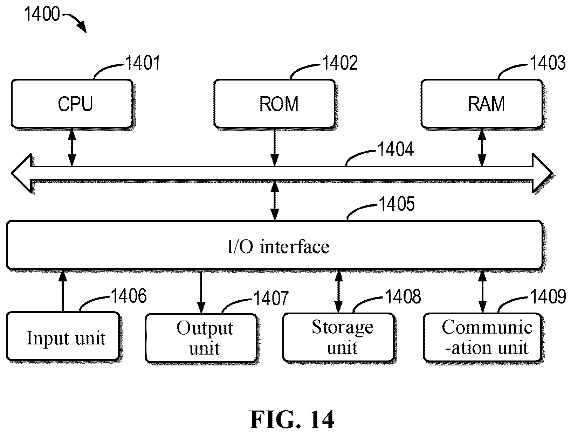

FIG. 14 illustrates a schematic block diagram of an example device 1400 for implementing embodiments of the present disclosure. The computing device 102 in FIG. 1 may be implemented by the device 1400. As shown in FIG. 14, the device 1400 comprises a central process unit (CPU) 1401, which can execute various suitable actions and processing based on the computer program instructions stored in the read-only memory (ROM) 1402 or computer program instructions loaded in the random-access memory (RAM) 1403 from the storage unit 1408. The RAM 1403 can also store all kinds of programs and data required by the operation of the device 1400. CPU 1401, ROM 1402 and RAM 1403 are connected to each other via a bus 1404. The input/output (I/O) interface 1405 is also connected to the bus 1404.

A plurality of components in the device 1400 is connected to the I/O interface 1405, including: an input unit 1406, such as keyboard, mouse and the like; an output unit 1407, e.g., various kinds of display and loudspeakers etc.; a storage unit 1408, such as disk and optical disk etc.; and a communication unit 1409, such as network card, modem, wireless transceiver and the like. The communication unit 1409 allows the device 1400 to exchange information/data with other devices via the computer network, such as Internet, and/or various telecommunication networks.

The above described procedure and processing, such as method 200 and examples 300 and 1200, can be executed by the processing unit 1401. For example, in some embodiments, method 200 and examples 300 and 1200 can be implemented as a computer software program tangibly included in the machine-readable medium, e.g., storage unit 1408. In some embodiments, the computer program can be partially or fully loaded and/or mounted to the apparatus 1400 via ROM 1402 and/or communication unit 1409. When the computer program is loaded to RAM 1403 and executed by the CPU 1401, one or more actions of the above described method 200 and examples 300 and 1200 can be implemented.

The present disclosure can be method, apparatus, system and/or computer program product. The computer program product can include a computer-readable storage medium, on which the computer-readable program instructions for executing various aspects of the present disclosure are loaded.

The computer-readable storage medium can be a tangible apparatus that maintains and stores instructions utilized by the instruction executing apparatuses. The computer-readable storage medium can be, but not limited to, such as electrical storage device, magnetic storage device, optical storage device, electromagnetic storage device, semiconductor storage device or any appropriate combinations of the above. More concrete examples of the computer-readable storage medium (non-exhaustive list) include: portable computer disk, hard disk, random-access memory (RAM), read-only memory (ROM), erasable programmable read-only memory (EPROM or flash), static random-access memory (SRAM), portable compact disk read-only memory (CD-ROM), digital versatile disk (DVD), memory stick, floppy disk, mechanical coding devices, punched card stored with instructions thereon, or a projection in a slot, and any appropriate combinations of the above. The computer-readable storage medium utilized here is not interpreted as transient signals per se, such as radio waves or freely propagated electromagnetic waves, electromagnetic waves propagated via waveguide or other transmission media (such as optical pulses via fiber-optic cables), or electric signals propagated via electric wires.

The described computer-readable program instruction can be downloaded from the computer-readable storage medium to each computing/processing device, or to an external computer or external storage via Internet, local area network, wide area network and/or wireless network. The network can comprise copper-transmitted cable, optical fiber transmission, wireless transmission, router, firewall, switch, network gate computer and/or edge server. The network adapter card or network interface in each computing/processing device receives computer-readable program instructions from the network and forwards the computer-readable program instructions for storage in the computer-readable storage medium of each computing/processing device.

The computer program instructions for executing operations of the present disclosure can be assembly instructions, instructions of instruction set architecture (ISA), machine instructions, machine-related instructions, microcode, firmware instructions, state setting data, or source codes or target codes written in any combinations of one or more programming languages, wherein the programming languages comprise object-oriented programming languages, e.g., Smalltalk, C++ and so on, and traditional procedural programming languages, such as "C" language or similar programming languages. The computer-readable program instructions can be implemented fully on the user computer, partially on the user computer, as an independent software package, partially on the user computer and partially on the remote computer, or completely on the remote computer or server. In the case where remote computer is involved, the remote computer can be connected to the user computer via any type of networks, including local area network (LAN) and wide area network (WAN), or to the external computer (e.g., connected via Internet using the Internet service provider). In some embodiments, state information of the computer-readable program instructions is used to customize an electronic circuit, e.g., programmable logic circuit, field programmable gate array (FPGA) or programmable logic array (PLA). The electronic circuit can execute computer-readable program instructions to implement various aspects of the present disclosure.

Various aspects of the present disclosure are described here with reference to flow chart and/or block diagram of method, apparatus (system) and computer program products according to embodiments of the present disclosure. It should be understood that each block of the flow chart and/or block diagram and the combination of various blocks in the flow chart and/or block diagram can be implemented by computer-readable program instructions.

The computer-readable program instructions can be provided to the processing unit of general-purpose computer, dedicated computer or other programmable data processing apparatuses to manufacture a machine, such that the instructions that, when executed by the processing unit of the computer or other programmable data processing apparatuses, generate an apparatus for implementing functions/actions stipulated in one or more blocks in the flow chart and/or block diagram. The computer-readable program instructions can also be stored in the computer-readable storage medium and cause the computer, programmable data processing apparatus and/or other devices to work in a particular manner, such that the computer-readable medium stored with instructions comprises an article of manufacture, including instructions for implementing various aspects of the functions/actions stipulated in one or more blocks of the flow chart and/or block diagram.

The computer-readable program instructions can also be loaded into computer, other programmable data processing apparatuses or other devices, so as to execute a series of operation steps on the computer, other programmable data processing apparatuses or other devices to generate a computer-implemented procedure. Therefore, the instructions executed on the computer, other programmable data processing apparatuses or other devices implement functions/actions stipulated in one or more blocks of the flow chart and/or block diagram.

The flow chart and block diagram in the drawings illustrate system architecture, functions and operations that may be implemented by system, method and computer program product according to multiple implementations of the present disclosure. In this regard, each block in the flow chart or block diagram can represent a module, a part of program segment or code, wherein the module and the part of program segment or code include one or more executable instructions for performing stipulated logic functions. In some alternative implementations, it should be noted that the functions indicated in the block can also take place in an order different from the one indicated in the drawings. For example, two successive blocks can be in fact executed in parallel or sometimes in a reverse order dependent on the involved functions. It should also be noted that each block in the block diagram and/or flow chart and combinations of the blocks in the block diagram and/or flow chart can be implemented by a hardware-based system exclusive for executing stipulated functions or actions, or by a combination of dedicated hardware and computer instructions.

Various embodiments of the present disclosure have been described above and the above description is only exemplary rather than exhaustive and is not limited to the embodiments of the present disclosure. Many modifications and alterations, without deviating from the scope and spirit of the explained various embodiments, are obvious for those skilled in the art. The selection of terms in the text aims to best explain principles and actual applications of each embodiment and technical improvements made in the market by each embodiment, or enable those ordinary skilled in the art to understand embodiments of the present disclosure.

## Claims

1. A method for generating an image, comprising:
generating, based on a user-generated content, a content descriptive text for the user-generated content;
generating, based on the content descriptive text, a set of template elements of a template for the user-generated content; and
generating, based on the set of template elements and the user-generated content, a target composite image.

2. The method of claim 1, wherein the set of template elements include a background image, and wherein generating a set of template elements of a template for the user-generated content comprises:
generating, based on the content descriptive text, first image prompt information for the user-generated content; and
generating, based on the first image prompt information, the background image for the template.

3. The method of claim 1, wherein the set of template elements further comprises at least one of: a summary descriptive text or a sticker, wherein generating a set of template elements of a template for the user-generated content further comprises at least one of:
generating, based on the content descriptive text, the summary descriptive text for the template; or
generating, based on the content descriptive text, the sticker for the template.

4. The method of claim 3, wherein generating, based on the content descriptive text, the sticker for the template comprises:
generating, based on the content descriptive text, second image prompt information for the user-generated content; and
generating, based on the second image prompt information, the sticker for the template.

5. The method of claim 2, wherein the first image prompt information comprises at least one of: content of the background image or a color of the background image.

6. The method of claim 2, wherein generating, based on the first image prompt information, the background image for the template comprises:
generating the background image by applying the first image prompt information to an image generating model, wherein the image generating model is a diffusion model.

7. The method of claim 6, wherein training of the image generating model comprises:
obtaining a sample image prompt information and a sample image;
obtaining a predicted image by applying the sample image prompt information to the image generating model; and
adjusting parameters of the image generating model based on the sample image and the predicted image.

8. The method of claim 1, wherein generating, based on the set of template elements and the user-generated content, a target composite image comprises:
generating a set of candidate composite images based on the set of template elements and the user-generated content; and
selecting the target composite image from the set of candidate composite images.

9. The method of claim 8, wherein generating a set of candidate composite images based on the set of template elements and the user-generated content comprises:
determining a first plurality of positions available for placing a template element in the set of template elements and a second plurality of positions available for placing the user-generated content; and
generating the set of candidate composite images by placing the template element respectively at the first plurality of positions and placing the user-generated content respectively at the second plurality of positions.

10. The method of claim 8, wherein generating a set of candidate composite images based on the set of template elements and the user-generated content comprises:
determining a plurality of predetermined rules for placing the set of template elements and the user-generated content; and
generating the set of candidate composite images based on the plurality of predetermined rules.

11. The method of claim 8, wherein selecting the target composite image from the set of candidate composite images comprises:
determining a set of scores for the set of candidate composite images; and
selecting the target composite image from the set of candidate composite images based on the set of scores, wherein a score of the target composite image exceeds a threshold score.

12. The method of claim 1, wherein generating a content descriptive text for the user-generated content comprises:
obtaining a content descriptive text for the user-generated content by applying the user-generated content to a machine learning model.

13. The method of claim 11, wherein the user-generated content is an image or a video, and the machine learning model is a visual model.

14. An apparatus for generating an image, comprising:
a content descriptive text generation module configured to generate, based on a user-generated content, a content descriptive text for the user-generated content;
a set of template elements generation module configured to generate, based on the content descriptive text, a set of template elements of a template for the user-generated content; and
a target composite image generation module configured to generate, based on the set of template elements and the user-generated content, a target composite image.

15. An electronic device, comprising:
at least one processor; and
a memory for storing at least one program which, when executed by the at least one processor, causes the at least one processor to perform the method according to any of claims 1-13.

16. A computer-readable storage medium with computer programs stored thereon which, when executed by a processor, cause the processor to perform the method according to any of claims 1-13.

17. A computer program product, comprising computer programs which, when executed by a processor, cause the processor to perform the method according to any of claims 1-13.
